# EUROPEAN PATENT APPLICATION

(11) **EP 4 369 579 A1**
(43) Date of publication of application: **15.05.2024**
(21) Application number: 22207242.3
(22) Date of filing: 14.11.2022
(51) Int. Cl.: H02M 1/00, C25B 9/70, H02J 3/38

(54) **HYDROGEN PRODUCTION BY ELECTROLYSIS**

(71) Applicant: L'AIR LIQUIDE, SOCIETE ANONYME POUR L'ETUDE ET L'EXPLOITATION DES PROCEDES GEORGES CLAUDE, 75321 Paris (FR)
(72) Inventor: Kumar, Bhunesh, 60439 Frankfurt am Main (DE); Combes, Gary, 60439 Frankfurt am Main (DE)
(74) Representative: Schwenderling, Jens

(57) **Abstract**

Electrolysis arrangement (1) for producing hydrogen by electrolysis, comprising:
- a first input terminal (2.1) for suppling electrical energy to the electrolysis arrangement (1),
- a second input terminal (2.2) for suppling electrical energy to the electrolysis arrangement (1),
- a first transformer (3.1),
- a second transformer (3.2),
- a first group (A) of electrolysis stacks (4), which comprises a first sub-group (A.1) and a second sub-group (A.2),
- a second group (B) of electrolysis stacks (4) which comprises a first sub-group (B.1) and a second sub-group (B.2),

wherein the electrolysis stacks (4) of the first group (A) are spatially separated from the electrolysis stacks (4) of the second group (B),
wherein the electrolysis stacks (4) of the first sub-group (A.1) of the first group (A) and of the first sub-group (B.1) of the second group (B) are electrically connected via the first transformer (3.1) to the first input terminal (2.1), and
wherein the electrolysis stacks (4) of the second sub-group (A.2) of the first group (A) and of the second sub-group (B.2) of the second group (B) are connected electrically via the second transformer (3.2) to the second input terminal (2.2).

## Description

The invention is directed to an electrolysis arrangement and a method for producing hydrogen by electrolysis, in particular on an industrial scale.

Hydrogen can be produced by water electrolysis. The electrical energy required for this process can be supplied to the electrolysis plant from an external power grid. In general, this requires the voltage available from the power grid to be transformed to the operation voltage of the electrolysis plant. This is particularly true for large electrolysis plants that are connected directly to the high voltage power grid.

Known electrolysis concepts are usually not sufficiently flexible and reliable to be used with electrical energy from renewable energy sources. This is particularly true because it is in the nature of renewable energy sources to be fluctuating. Such fluctuations are disadvantageous in the context of electrolysis, because electrolysis is performed with DC voltage, while electrical energy is usually supplied as AC voltage. Rectifying the AC voltage can cause harmonics that pollute the power grid. With fluctuating availability of renewable energy, handling the harmonics is particularly difficult. In particular, elaborate power filtering might be necessary.

For large scale electrolysis plant installations, conveying the required power from the grid to the electrolysis arrangements is often constrained by current limitations as set by regulatory authorities. The use of SF6 in transformers also presents an environmental and safety constraint that regulatory authorities are seeking to remove from use. The short circuit current is also a key physical design limit. These limits strongly influence the HV transformer arrangement which lead typically to considerable capital cost in materials and lower plant efficiency.

Moreover, maintenance of the known electrolysis arrangements is often difficult. In particular, maintenance of a single electrolysis stack is challenging in case other electrolysis stacks are operating with the same switchgear and transformer. The high levels of current and voltage require particular caution during maintenance work.

The object of the invention is to improve the prior art in terms of flexibility, reliability and maintainability.

The object is solved with the electrolysis arrangement and method according to the independent claims. Advantageous refinements are presented in the dependent claims. The features described in the claims and in the description can be combined with each other in any technologically reasonable manner.

According to the invention an electrolysis arrangement for producing hydrogen by electrolysis is presented. The electrolysis arrangement comprises:
- a first input terminal for suppling electrical energy to the electrolysis arrangement,
- a second input terminal for suppling electrical energy to the electrolysis arrangement,
- a first transformer,
- a second transformer,
- a first group of electrolysis stacks, which comprises a first sub-group and a second sub-group,
- a second group of electrolysis stacks which comprises a first sub-group and a second sub-group,

wherein the electrolysis stacks of the first group are spatially separated from the electrolysis stacks of the second group,
wherein the electrolysis stacks of the first sub-group of the first group and of the first sub-group of the second group are powered via the first transformer and the first input terminal, and
wherein the electrolysis stacks of the second sub-group of the first group and of the second sub-group of the second group are powered via the second transformer and the second input terminal.

The electrolysis arrangement can be used for electrolysis of a medium. Preferably, the medium is liquid, in particular water. The electrolysis arrangement is preferably configured for producing hydrogen by water electrolysis. In water electrolysis, the medium comprises water such that hydrogen and oxygen can be obtained as the electrolysis products. Therein, it is not necessary that the medium is pure water. In particular, the medium may contain dissolved salts such as KOH for alkaline electrolysis or electrolysis using anion exchange membrane cells. The electrolysis products are preferably gaseous.

The electrolysis arrangement comprises multiple electrolysis stacks. Each of the electrolysis stacks comprises multiple electrolysis cells. Within the electrolysis stacks the electrolysis of the medium can be performed using the electrolysis cells. Thereby, oxygen as an anode product and hydrogen as a cathode product are obtained. A module may describe a collection of one or more stacks, which are connected to one or more rectifiers, and connected to one transformer. The rectifier capacity controls the maximum DC Voltage that can be applied to the stack(s) to which it is connected.

The described electrolysis arrangement is preferably used for industrial scale electrolysis. In particular, this is to be understood in contrast to experimental setups on a laboratory scale. The industrial scale can be quantified in terms of the maximum rated DC power consumption of the electrolysis module. The maximum rated DC power consumption is what is commonly used to describe the electrolysis module. For example, a "5 MW electrolysis module" has a maximum rated DC power consumption of 5 MW. Preferably, the electrolysis module of the described electrolysis arrangement each have a maximum rated DC power consumption in the range of 1 to 50 MW, in particular in the range of 3 to 30 MW. Further, it is preferred that at least one of the electrolysis products is obtained at a rate of 50 to 2000 Nm³ per hour per electrolysis stack. This applies, in particular, to the production of hydrogen in the case of water electrolysis. The electrolysis is preferably performed in an automated way. The electrolysis arrangement can also be referred to as an electrolysis plant.

In order to power the electrolysis stacks, the electrolysis arrangement comprises input terminals for suppling electrical energy to the electrolysis arrangement as well as transformers. At the input terminals a voltage can be applied from an external energy source. Preferably, the input terminals are connected to an external power grid, in particular to a voltage network having a voltage of more than 1 kV, in particular of more than 30 kV. Preferably, a voltage in the range of 50 kV to 150 kV is applied to each of the input terminals. Preferably, the input terminals are connected to a renewable energy source. Using one of the transformers, the voltage applied to the respective input terminal can be transformed to the operation voltage of the electrolysis stacks. The transformed voltage, which usually is an AC voltage, can be rectified and supplied to the electrolysis stacks as a DC voltage.

The equipment used for supplying electrical energy to the electrolysis stacks can be referred to as an Electrical Distribution System (EDS). The Electrical Distribution System comprises the input terminals, the transformers, rectifiers, switchgear and cables.

The electrolysis arrangement comprises a first input terminal and a second input terminal. That is, the electrolysis arrangement has two or more input terminals. Such redundancy increases the reliability of the electrolysis arrangement. In case of a power failure at one of the input terminals, the other input terminal(s) may still be used. The first input terminal and the second input terminal can be connected to different external power sources. However, the described improvement in reliability can also be achieved if both the first input terminal and the second input terminal are connected to the same external power source, since an error can also occur between one of the input terminals and the electrolysis stacks powered thereby. In particular, the first input terminal and the second input terminal can both be connected to an overall input terminal of the electrolysis arrangement. To the overall input terminal, a power line can be connected that splits into a first branch leading to the first input terminal and a second branch leading to the second input terminal.

The electrolysis arrangement comprises a first transformer and a second transformer. The first transformer is connected to the first input terminal and the second transformer is connected to the second input terminal. This redundancy contributes to the above described advantage of having multiple input terminals. In general, it is preferred that the electrolysis arrangement comprises one transformer per input terminal.

The electrolysis stacks are divided into groups and sub-groups. Each of the electrolysis stacks belongs to one and only one group. Also, each of the electrolysis stacks belongs to one and only one sub-group.

Within a sub-group, the electrolysis stacks can be arranged in various ways. A sub-group of the electrolysis stacks can comprise one of more electrolysis modules. An electrolysis module can comprise one or more electrolysis stacks and further elements such as a transformer. In an example, a sub-group comprises three electrolysis modules, wherein each of the electrolysis modules comprises a transformer and three units of six electrolysis stacks each. The three units are connected to the transformer in parallel. In this example, each of the electrolysis modules comprises 3 x 6 = 18 electrolysis stacks. The sub-group comprises 3 x 18 = 54 electrolysis stacks. However, for the purpose of the invention it is not important how the electrolysis stacks are arranged and connected within the sub-groups. That is, the electrolysis stacks of a sub-group must not be arranged in one or more modules and the electrolysis stacks of an electrolysis module must not be arranged in one or more parallel units.

The electrolysis stacks of the first group are spatially separated from the electrolysis stacks of the second group. To this end, it can be distinguished between the electrolysis stacks of the first group and the electrolysis stacks of the second group. The electrolysis stacks of the first group can be spatially separated from the electrolysis stacks of the second group, for example, in that the electrolysis stacks of the first group are arranged spaced apart from the electrolysis stacks of the second group by more than an average spacing between the electrolysis stacks of the first group of electrolysis stacks. Alternatively or additionally, it is preferred that there is a separator element arranged between the electrolysis stacks of the first group and the electrolysis stacks of the second group. The separator element can be a wall of a building. In particular, the electrolysis stacks of the first group can be arranged in a different building than the electrolysis stacks of the second group.

Having the electrolysis stacks divided into the first group and the second group can facilitate maintenance. This applies particularly to maintenance work that requires all electrolysis stacks in a certain region to be put out of operation. With the described electrolysis arrangement such maintenance work can be performed in particular in that the electrolysis stacks of one of the groups are put out of operation, while the electrolysis stacks of the other group can still be operated. This is possible due to the spatial separation between the electrolysis stacks of the two groups. In particular, it is sufficient to put the electrolysis stacks of one of the groups out of operation for maintenance in case the electrolysis stacks of the first group are arranged in a different building than the electrolysis stacks of the second group. However, such strict separation is not necessary to achieve the described advantage. If the electrolysis stacks of the different groups are spaced apart from each other and/or if the electrolysis stacks of the first group are arranged in a different room of a building than the electrolysis stacks of the second group, the same can be achieved.

Further, the electrolysis stacks are divided into sub-groups. The sub-groups are defined in terms of how electrical energy can be supplied to the electrolysis stacks. The electrolysis stacks of the first sub-group of the first group and of the first sub-group of the second group are powered via the first transformer and the first input terminal. This can be realized in that the electrolysis stacks of the first sub-group of the first group and of the first sub-group of the second group are electrically connected via the first transformer to the first input terminal. In between the first input terminal and the mentioned electrolysis stacks elements such as an additional transformer can be provided along the path the electrical energy takes from the first input terminal to these electrolysis stacks. The electrolysis stacks of the second sub-group of the first group and of the second sub-group of the second group are powered via the second transformer to the second input terminal. This can be realized in that the electrolysis stacks of the second sub-group of the first group and of the second sub-group of the second group are electrically connected via the second transformer to the second input terminal. In between the second input terminal and the mentioned electrolysis stacks elements such as an additional transformer can be provided along the path the electrical energy takes from the second input terminal to these electrolysis stacks.

That is, the electrolysis stacks of both first sub-groups are powered via the first input terminal and the first transformer. The electrolysis stacks of both second sub-groups are powered via the second input terminal and the second transformer. To this end, the electrolysis stacks can be considered to be cross coupled. This is because both groups comprise a respective sub-group for each of the input terminals. This increases the reliability of the electrolysis arrangement. In case there is a power failure at one of the input terminals or a failure of one of the transformers, at least some of the electrolysis stacks of both groups can remain in operation. That is, a failure generally does not affect an entire group of electrolysis stacks.

In a preferred embodiment of the electrolysis arrangement the first transformer is a three-winding transformer,
wherein the first input terminal is electrically connected to a primary winding of the first transformer,
wherein the electrolysis stacks of the first sub-group of the first group are powered via a secondary winding of the first transformer, and
wherein the electrolysis stacks of the first sub-group of the second group are powered via a tertiary winding of the first transformer.

A three-winding transformer has a primary winding, a secondary winding and a tertiary winding. The advantage of this kind of transformer is that the load can be operated on both the secondary winding and the tertiary winding. In some applications the advantage is further that the tertiary winding can be used for the balance of plant load, whereas the secondary winding can be used for the main primary load to operate. There are many vector group configurations available for three-winding transformers such as delta-star-star, star-star-star and delta-star-delta.

Preferably, the electrolysis stacks of the first sub-group of the first group are electrically connected to a secondary winding of the first transformer, and the electrolysis stacks of the first sub-group of the second group are electrically connected to a tertiary winding of the first transformer.

The primary winding can be considered an input of the first transformer. The secondary and tertiary windings can be considered two outputs of the first transformer. Preferably, the first transformer is symmetrical to the end that both outputs are identical to each other. By turning off the secondary winding of the first transformer, the electrolysis stacks of the first sub-group of the first group can be put out of operation. By turning off the tertiary winding of the first transformer, the electrolysis stacks of the first sub-group of the second group can be put out of operation.

With the first transformer being configured as a three-winding transformer, the electrical energy supplied via the first input terminal can be divided into two parts. These parts can be referred to as trains. For example, a 100 MW input available at the first input terminal can be divided into two trains of 50 MW each. Each of the first sub-groups of electrolysis stacks can be supplied with one of these trains.

Further, it was found that by using a three-winding transformer as the first transformer, fewer harmonics pollute an external power grid connected to the first input terminal. This is particularly true in the preferred case that a delta winding is used as the primary winding, which is connected to the respective input terminal. This reduces the required power filtering equipment.

In a further preferred embodiment of the electrolysis arrangement the first transformer has a delta-star-delta configuration.

Three-winding transformers with a delta-star-delta configuration have an inherent advantage due to their own configuration to mitigate harmonics pollution. This kind of configuration has an advantage in the design of large electrolyser plants, where low order harmonics can be generated through harmonics pollutants.

Rectifiers can produce harmonics pollution, which can be compensated due to the three-winding transformer having the delta-star-delta configuration. Reduction in the harmonics current can improve the power quality at the electrolyser connection point with utilities. This will help to reduce the size of filter and capacitor to compensate and meet the requirement of utilities. This leads to improve the costs in terms of energy losses and energy utilization.

In a further preferred embodiment of the electrolysis arrangement the second transformer is a three-winding transformer,
wherein the second input terminal is electrically connected to a primary winding of the second transformer,
wherein the electrolysis stacks of the second sub-group of the first group are powered via a secondary winding of the second transformer, and
wherein the electrolysis stacks of the second sub-group of the second group are powered via a tertiary winding of the second transformer.

Preferably, the electrolysis stacks of the second sub-group of the first group are electrically connected to a secondary winding of the second transformer, and the electrolysis stacks of the second sub-group of the second group are electrically connected to a tertiary winding of the second transformer.

The primary winding can be considered an input of the second transformer. The secondary and tertiary windings can be considered two outputs of the second transformer. Preferably, the second transformer is symmetrical to the end that both outputs are identical to each other. By turning off the secondary winding of the second transformer, the electrolysis stacks of the second sub-group of the first group can be put out of operation. By turning off the tertiary winding of the second transformer, the electrolysis stacks of the second sub-group of the second group can be put out of operation.

With the second transformer being configured as a three-winding transformer, the electrical energy supplied via the second input terminal can be divided into two parts. These parts can be referred to as trains. For example, a 100 MW input available at the second input terminal can be divided into two trains of 50 MW each. Each of the second sub-groups of electrolysis stacks can be supplied with one of these trains.

Further advantages of such an arrangement relative to the comparably designed twowinding solution include but are not limited to:
1) The maximum current load for the three-winding transformer is <60% than that of the comparable two-winding transformer. This results in reduced cable thickness for power transfer across the plant.
2) Reduced heat generation in the main transformer, resulting in reduced cooling demands and likely the absence of fan cooled solutions, which improves reliability and reduces maintenance demands
3) Compared to the two-winding transformer, three-winding transformers can be used to operate a greater electrolyser load and have negligible losses on the downstream network. This enables the three-winding transformer to avoid the requirements for additional taps to operate at full load capacity, unlike the case for the two-winding transformer and thereby avoiding additional cost.
4) A reduced impedance, which results in lower load losses at full load, which is ideal for plants that are under high load.

Further, it was found that by using a three-winding transformer as the second transformer, fewer harmonics pollute an external power grid connected to the second input terminal. This is particularly true in the preferred case that a delta winding is used as the primary winding, which is connected to the respective input terminal. This reduces the required power filtering equipment.

Further, it was found that by using a three-winding transformer as the second transformer, the design provides an inherent flexibility for optimally designing either for regular high load use, with the benefit of reduced Copper in the transformer and minimised full load losses, or for those plants under low load levels, whereby load losses are minimised at reduced outputs (not full load). Finally, the three-winding arrangement can provide some level of mitigation to increased harmonics in a delta/start/delta arrangement in the event that the MV transformers of electorlysers utilise phase shifted design and one of these units is offline for maintenance purposes.

There are also restrictions from the environmental agencies of various countries for the electrical installation for the use of Air Insulated switchgear (AIS) rather than Gas Insulated Switchgear (GIS) at medium voltage and low voltage level. GIS uses SF6, which is not environmentally friendly and it is toxic in the event of leakage. The AIS switchgear at medium voltage has the limited current capacity and short circuit current. This limits the design for the electrolyser plant with two-winding transformers up to 100MW. Whereas this 100MW limitation can be broken with the help of three-winding transformers to design the electrolysis plant more than 100 MW using the advantage of secondary and tertiary windings for the transformer.

Three winding transformers for the electrolyser plant application can be designed to increase the impedance to reduce the load losses and short circuit current. Which increases little in the investment costs, but provides the opportunity to run the electrolyser plant with intermittent power supply sources such as wind and solar. In reduction in the load losses having the potential saving on the costs, in context to the increasing energy prices.

In a further preferred embodiment of the electrolysis arrangement the second transformer has a delta-star-delta configuration.

In a further preferred embodiment the electrolysis arrangement further comprises a first balance of plant installation, which is assigned to the electrolysis stacks of the first group and which is electrically connected to the first input terminal such that in a first mode the first balance of plant installation can be powered via the first input terminal, and a second balance of plant installation, which is assigned to the electrolysis stacks of the second group and which is electrically connected to the second input terminal such that in the first mode the second balance of plant installation can be powered via the second input terminal.

The term "balance of plant" summarizes supporting components and auxiliary systems that are used to perform the electrolysis. For example, the balance of plant installations can each comprise a pump for supplying the electrolysis medium to the respective electrolysis stacks and a rectifier, via which electrical energy can be supplied to the respective electrolysis stack. The term "balance of plant" may also extend to include items for gas compression, purification, and/or utilities such as cooling systems and instrument gas provision.

The first balance of plant installation is assigned to the electrolysis stacks of the first group. This means that the first balance of plant installation can contribute to performing the electrolysis within the electrolysis stacks of the first group. It is preferred that the first balance of plant installation is only assigned to the electrolysis stacks of the first group and, in particular, not to the electrolysis stacks of the second group. To this end, the electrolysis stacks of the first group can further be distinguished from the electrolysis stacks of the second group. The same applies analogously to the second balance of plant installation and the electrolysis stacks of the second group.

Owing to the spatial separation of the electrolysis stacks of the first group from the electrolysis stacks of the second groups, it is reasonable to have two separate balance of plant installations. In particular, this facilitates maintenance. For example, if maintenance is supposed to be performed on the electrolysis stacks of the first group, these electrolysis stacks can be put out of operation together with the first balance of plant installation.

The first balance of plant installation is generally powered via the first input terminal and the second balance of plant installation is generally powered via the second input terminal. This is referred to as a first mode. In a standard operation mode, the balance of plant installations are preferably operated in the first mode.

In a further preferred embodiment of the electrolysis arrangement the first balance of plant installation and the second balance of plant installation are electrically connectable to each other such that in a second mode the first balance of plant installation can be powered via the second balance of plant installation and in a third mode the second balance of plant installation can be powered via the first balance of plant installation.

In the second mode, both balance of plant installations are powered via the second input terminal. That is, in the second mode and in the third mode the first balance of plant installation and the second balance of plant installation are electrically connected to each other. In the third mode, both balance of plant installations are powered via the first input terminal. That is, in case of a power failure at the first input terminal, the affected first balance of plant installation can be powered via the second balance of plant installation and, consequently, via the second input terminal. The same applies analogously in case of a power failure of the second input terminal. This contributes to the above described reliability of the described electrolysis arrangement. Nevertheless, various alternative embodiments are conceivable, such that it is in general not necessary to have the balance of plant installations configured as described with respect to the present embodiment. In particular, it is not necessary to power the balance of plant installations via the input terminals that are also used for powering the electrolysis stacks.

In a further preferred embodiment, the electrolysis arrangement further comprises a first building, in which the electrolysis stacks of the first group are arranged and a second building, in which the electrolysis stacks of the second group are arranged.

Having the groups of electrolysis stacks arranged in different buildings enhances the above described advantage that maintenance work performed on one of the groups does not require the electrolysis stacks of the other group to be put out of operation as well.

As a further aspect of the invention, a method for producing hydrogen by electrolysis using an electrolysis arrangement configured as described is presented, wherein the electrolysis arrangement is operated at least temporarily in a standard operation mode, in which the electrolysis stacks of the first sub-group of the first group and of the first sub-group of the second group are powered via the first transformer and the first input terminal, and wherein the electrolysis stacks of the second sub-group of the first group and of the second sub-group of the second group are powered via the second transformer and the second input terminal.

The features and advantages of the electrolysis arrangement can be applied to the method, and vice versa.

In the standard operation mode, the balance of plant installations are preferably operated in the first mode.

The standard operation mode can be used if both input terminals are operational. Hence, it is preferred that the electrolysis arrangement is operated not only temporarily in the standard operation mode, but for the entire duration of the method. However, in reality this might not always be possible. Hence, it is alternatively preferred that the method comprises operating the electrolysis arrangement temporarily in the standard operation mode and temporarily in one or more of the modes described in the following.

In a preferred embodiment of the method, the electrolysis arrangement is operated temporarily in a first maintenance mode, in which the electrolysis stacks of the first sub-group of the second group are powered via the first transformer and the first input terminal, wherein the electrolysis stacks of the second sub-group of the second group are powered via the second transformer and the second input terminal, and wherein the electrolysis stacks of the first group are out of operation.

In the first maintenance mode, maintenance can be performed on the electrolysis stacks of the first group. To this end, these electrolysis stacks are put out of operation, preferably for the duration of the maintenance. Owing to the described cross-coupling of the groups of electrolysis stacks, still both the first input terminal and the second input terminal can be used for the electrolysis stacks of the second group.

In a further preferred embodiment of the method the electrolysis arrangement is operated temporarily in a second maintenance mode, in which the electrolysis stacks of the first sub-group of the first group are powered via the first transformer and the first input terminal, wherein the electrolysis stacks of the second sub-group of the first group are powered via the second transformer and the second input terminal, and wherein the electrolysis stacks of the second group are out of operation.

In the second maintenance mode, maintenance can be performed on the electrolysis stacks of the second group. To this end, these electrolysis stacks are put out of operation, preferably for the duration of the maintenance. Owing to the described cross-coupling of the groups of electrolysis stacks, still both the first input terminal and the second input terminal can be used for the electrolysis stacks of the first group.

In a further preferred embodiment of the method the electrolysis arrangement is operated temporarily in a first power supply failure mode, in which the electrolysis stacks of the second sub-group of the first group and of the second sub-group of the second group are powered via the second transformer and the second input terminal, and wherein the electrolysis stacks of the first sub-group of the first group and of the first sub-group of the second group are out of operation.

The first power supply failure mode can be used in case of a failure of the first input terminal and/or the first transformer. In that case, the electrolysis stacks powered via the first input terminal, i.e. the electrolysis stacks of the first sub-groups, are put out of operation. Still, the electrolysis stacks powered via the second input terminal, i.e. the electrolysis stacks of the second sub-groups, can be used. To this end, some of the electrolysis stacks of both groups can still be used.

In the first power supply failure mode the balance of plant installations are preferably operated in the second mode. Therein, both balance of plant installations are powered via the second input terminal and the second transformer.

In a further preferred embodiment of the method the electrolysis arrangement is operated temporarily in a second power supply failure mode, in which the electrolysis stacks of the first sub-group of the first group and of the first sub-group of the second group are powered via the first transformer and the first input terminal, and wherein the electrolysis stacks of the second sub-group of the first group and of the second sub-group of the second group are out of operation.

The second power supply failure mode can be used in case of a failure of the second input terminal and/or the second transformer. In that case, the electrolysis stacks powered via the second input terminal, i.e. the electrolysis stacks of the second sub-groups, are put out of operation. Still, the electrolysis stacks powered via the first input terminal, i.e. the electrolysis stacks of the first sub-groups, can be used. To this end, some of the electrolysis stacks of both groups can still be used.

In the second power supply failure mode the balance of plant installations are preferably operated in the third mode. Therein, both balance of plant installations are powered via the first input terminal and the first transformer.

In the following the invention will be described with respect to the figure. The figure shows a preferred embodiment, to which the invention is not limited. The figure and the dimensions shown therein are only schematic. The figure shows:

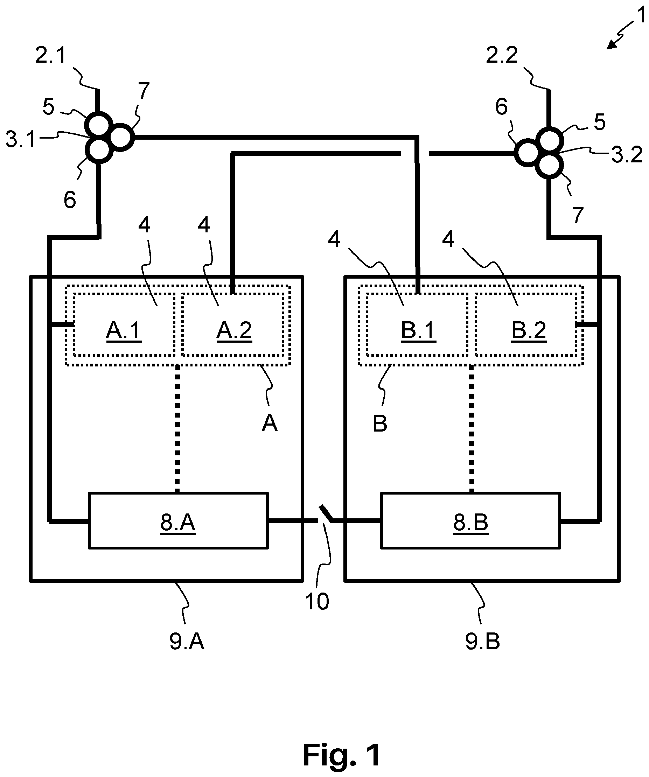

- Fig. 1:: an electrolysis arrangement according to the invention.
Fig. 1 shows an electrolysis arrangement 1 for producing hydrogen by electrolysis. The electrolysis arrangement 1 comprises a first input terminal 2.1 for suppling electrical energy to the electrolysis arrangement 1 and a second input terminal 2.2 for suppling electrical energy to the electrolysis arrangement 1. The input terminals 2.1, 2.2 can be connected, for example, to the same external power grid or to different external power grids. Further, the electrolysis arrangement 1 comprises a first transformer 3.1 and a second transformer 3.2. The first transformer 3.1 is connected to the first input terminal 2.1 and the second transformer 3.2 is connected to the second input terminal 2.2. Further, the electrolysis arrangement 1 comprises multiple electrolysis stacks 4. Using the electrolysis stacks 4, the electrolysis can be performed in order to obtain hydrogen.

The electrolysis stacks 4 are divided into a first group A and a second group B. The electrolysis stacks 4 of the first group A are divided into a first sub-group A.1 and a second sub-group A.2. The electrolysis stacks 4 of the second group B are divided into a first sub-group B.1 and a second sub-group B.2. That is, each of the electrolysis stacks 4 belongs either to the first group A or to the second group B. Also, each of the electrolysis stacks 4 of the first group A belongs either to the first sub-group A.1 or to the second sub-group A.2 of the first group A and each of the electrolysis stacks 4 of the second group B belongs either to the first sub-group B.1 or to the second sub-group B.2 of the second group B.

The electrolysis stacks 4 of the first group A are spatially separated from the electrolysis stacks 4 of the second group B in that the electrolysis stacks 4 of the first group A are arranged in a first building 9.A of the electrolysis arrangement 1 and the electrolysis stacks 4 of the second group B are arranged in a second building 9.B of the electrolysis arrangement 1.

The electrolysis stacks 4 of the first sub-group A.1 of the first group A and of the first sub-group B.1 of the second group B are electrically connected via the first transformer 3.1 to the first input terminal 2.1. The electrolysis stacks 4 of the second sub-group A.2 of the first group A and of the second sub-group B.2 of the second group B are connected electrically via the second transformer 3.2 to the second input terminal 2.2.

The first transformer 3.1 is a three-winding transformer with a delta-star-delta configuration. The first input terminal 2.1 is electrically connected to a primary winding 5 of the first transformer 3.1, the electrolysis stacks 4 of the first sub-group A.1 of the first group A are electrically connected to a secondary winding 6 of the first transformer 3.1, and the electrolysis stacks 4 of the first sub-group B.1 of the second group B are electrically connected to a tertiary winding 7 of the first transformer 3.1.

The second transformer 3.2 is a three-winding transformer having a delta-star-delta configuration. The second input terminal 2.2 is electrically connected to a primary winding 5 of the second transformer 3.2, the electrolysis stacks 4 of the second sub-group A.2 of the first group A are electrically connected to a secondary winding 6 of the second transformer 3.2, and the electrolysis stacks 4 of the second sub-group B.2 of the second group B are electrically connected to a tertiary winding 7 of the second transformer 3.2.

The electrolysis arrangement further comprises a first balance of plant installation 8.A, which is assigned to the electrolysis stacks 4 of the first group A. This is illustrated in Fig. 1 by a dotted line. The first balance of plant installation 8.A is electrically connected to the first input terminal 2.1 via the electrolysis stacks 4 of the first sub-group A.1 of the first group A. This is illustrated in Fig. 1 by a solid line.

The electrolysis arrangement further comprises a second balance of plant installation 8.B, which is assigned to the electrolysis stacks 4 of the second group B. This is illustrated in Fig. 1 by a dotted line. The second balance of plant installation 8.B is electrically connected to the second input terminal 2.2 via the electrolysis stacks 4 of the second sub-group B.2 of the second group B. This is illustrated in Fig. 1 by a solid line.

Further, the first balance of plant installation 8.A and the second balance of plant installation 8.B are connectable to each other. To this end, a connection line with a switch 10 is provide between the first balance of plant installation 8.A and the second balance of plant installation 8.B.

In a first mode, the first balance of plant installation 8.A is powered via the first input terminal 2.1 and the second balance of plant installation 8.B is powered via the second input terminal 2.2. The switch 10 is open such that the first balance of plant installation 8.A and the second balance of plant installation 8.B are not connected to each other.

In a second mode, the second balance of plant installation 8.B is powered via the second input terminal 2.2 and the first balance of plant installation 8.A is powered via the second balance of plant installation 8.B. That is, in the second mode, both balance of plant installations 8.A, 8.B are powered via the second input terminal 2.2. The switch 10 is closed such that the first balance of plant installation 8.A and the second balance of plant installation 8.B are connected to each other.

In a third mode, the first balance of plant installation 8.A is powered via the first input terminal 2.1 and the second balance of plant installation 8.B is powered via the first balance of plant installation 8.A. That is, in the third mode, both balance of plant installations 8.A, 8.B are powered via the first input terminal 2.1. The switch 10 is closed such that the first balance of plant installation 8.A and the second balance of plant installation 8.B are connected to each other.

The electrolysis arrangement 1 can be operated in the following operation modes. In the method according to the invention, the electrolysis arrangement 1 is operated in each of these operation modes temporarily.

In a standard operation mode the electrolysis stacks 4 of the first sub-group A.1 of the first group A and of the first sub-group B.1 of the second group B are powered via the first transformer 3.1 and the first input terminal 2.1. The electrolysis stacks 4 of the second sub-group A.2 of the first group A and of the second sub-group B.2 of the second group B are powered via the second transformer 3.2 and the second input terminal 2.2.

In a first maintenance mode the electrolysis stacks 4 of the first sub-group B.1 of the second group B are powered via the first transformer 3.1 and the first input terminal 2.1. The electrolysis stacks 4 of the second sub-group B.2 of the second group B are powered via the second transformer 3.2 and the second input terminal 2.2. The electrolysis stacks 4 of the first group A are out of operation.

In a second maintenance mode the electrolysis stacks 4 of the first sub-group A.1 of the first group A are powered via the first transformer 3.1 and the first input terminal 2.1. The electrolysis stacks 4 of the second sub-group A.2 of the first group A are powered via the second transformer 3.2 and the second input terminal 2.2. The electrolysis stacks 4 of the second group B are out of operation.

In a first power supply failure mode the electrolysis stacks 4 of the second sub-group A.2 of the first group A and of the second sub-group B.2 of the second group B are powered via the second transformer 3.2 and the second input terminal 2.2. The electrolysis stacks 4 of the first sub-group A.1 of the first group A and of the first sub-group B.1 of the second group B are out of operation.

In a second power supply failure mode the electrolysis stacks 4 of the first sub-group A.1 of the first group A and of the first sub-group B.1 of the second group Bare powered via the first transformer 3.1 and the first input terminal 2.1. The electrolysis stacks 4 of the second sub-group A.2 of the first group A and of the second sub-group B.2 of the second group B are out of operation.

### List of reference numerals

- 1: electrolysis arrangement
- 2.1: first input terminal
- 2.2: second input terminal
- 3.1: first transformer
- 3.2: second transformer
- 4: electrolysis stacks
- 5: primary winding
- 6: secondary winding
- 7: tertiary winding
- 8.A: first balance of plant installation
- 8.B: second balance of plant installation
- 9.A: first building
- 9.B: second building
- 10: switch

- A: first group
- B: second group
- A.1: first sub-group of the first group
- A.2: second sub-group of the first group
- B.1: first sub-group of the second group
- B.2: second sub-group of the second group

## Claims

1. Electrolysis arrangement (1) for producing hydrogen by electrolysis, comprising:
- a first input terminal (2.1) for suppling electrical energy to the electrolysis arrangement (1),
- a second input terminal (2.2) for suppling electrical energy to the electrolysis arrangement (1),
- a first transformer (3.1),
- a second transformer (3.2),
- a first group (A) of electrolysis stacks (4), which comprises a first sub-group (A.1) and a second sub-group (A.2),
- a second group (B) of electrolysis stacks (4) which comprises a first sub-group (B.1) and a second sub-group (B.2),
wherein the electrolysis stacks (4) of the first group (A) are spatially separated from the electrolysis stacks (4) of the second group (B),
wherein the electrolysis stacks (4) of the first sub-group (A.1) of the first group (A) and of the first sub-group (B.1) of the second group (B) are powered via the first transformer (3.1) and the first input terminal (2.1), and
wherein the electrolysis stacks (4) of the second sub-group (A.2) of the first group (A) and of the second sub-group (B.2) of the second group (B) are powered via the second transformer (3.2) and the second input terminal (2.2).

2. Electrolysis arrangement (1) according to claim 1, wherein the first transformer (3.1) is a three-winding transformer,
wherein the first input terminal (2.1) is electrically connected to a primary winding (5) of the first transformer (3.1),
wherein the electrolysis stacks (4) of the first sub-group (A.1) of the first group (A) are powered via a secondary winding (6) of the first transformer (3.1), and
wherein the electrolysis stacks (4) of the first sub-group (B.1) of the second group (B) are powered via a tertiary winding (7) of the first transformer (3.1).

3. Electrolysis arrangement (1) according to claim 2, wherein the first transformer (3.1) has a delta-star-delta configuration.

4. Electrolysis arrangement (1) according to any of the preceding claims, wherein the second transformer (3.2) is a three-winding transformer,
wherein the second input terminal (2.2) is electrically connected to a primary winding (5) of the second transformer (3.2),
wherein the electrolysis stacks (4) of the second sub-group (A.2) of the first group (A) are powered via a secondary winding (6) of the second transformer (3.2), and
wherein the electrolysis stacks (4) of the second sub-group (B.2) of the second group (B) are powered via a tertiary winding (7) of the second transformer (3.2).

5. Electrolysis arrangement (1) according to claim 4, wherein the second transformer (3.2) has a delta-star-delta configuration.

6. Electrolysis arrangement (1) according to any of the preceding claims, further comprising a first balance of plant installation (8.A), which is assigned to the electrolysis stacks (4) of the first group (A) and which is electrically connected to the first input terminal (2.1) such that in a first mode the first balance of plant installation (8.A) can be powered via the first input terminal (2.1), and a second balance of plant installation (8.B), which is assigned to the electrolysis stacks (4) of the second group (B) and which is electrically connected to the second input terminal (2.2) such that in the first mode the second balance of plant installation (8.B) can be powered via the second input terminal (2.2).

7. Electrolysis arrangement (1) according to claim 6, wherein the first balance of plant installation (8.A) and the second balance of plant installation (8.B) are electrically connectable to each other such that in a second mode the first balance of plant installation (8.A) can be powered via the second balance of plant installation (8.B) and in a third mode the second balance of plant installation (8.B) can be powered via the first balance of plant installation (8.A).

8. Electrolysis arrangement (1) according to any of the preceding claims, further comprising a first building (9.A), in which the electrolysis stacks (4) of the first group (A) are arranged and a second building (9.B), in which the electrolysis stacks (4) of the second group (B) are arranged.

9. Method for producing hydrogen by electrolysis using an electrolysis arrangement (1) according to any of the preceding claims, wherein the electrolysis arrangement (1) is operated at least temporarily in a standard operation mode, in which the electrolysis stacks (4) of the first sub-group (A.1) of the first group (A) and of the first sub-group (B.1) of the second group (B) are powered via the first transformer (3.1) and the first input terminal (2.1), and wherein the electrolysis stacks (4) of the second sub-group (A.2) of the first group (A) and of the second sub-group (B.2) of the second group (B) are powered via the second transformer (3.2) and the second input terminal (2.2).

10. Method according to claim 9, wherein the electrolysis arrangement (1) is operated temporarily in a first maintenance mode, in which the electrolysis stacks (4) of the first sub-group (B.1) of the second group (B) are powered via the first transformer (3.1) and the first input terminal (2.1), wherein the electrolysis stacks (4) of the second sub-group (B.2) of the second group (B) are powered via the second transformer (3.2) and the second input terminal (2.2), and wherein the electrolysis stacks (4) of the first group (A) are out of operation.

11. Method according to claim 9 or 10, wherein the electrolysis arrangement (1) is operated temporarily in a second maintenance mode, in which the electrolysis stacks (4) of the first sub-group (A.1) of the first group (A) are powered via the first transformer (3.1) and the first input terminal (2.1), wherein the electrolysis stacks (4) of the second sub-group (A.2) of the first group (A) are powered via the second transformer (3.2) and the second input terminal (2.2), and wherein the electrolysis stacks (4) of the second group (B) are out of operation.

12. Method according to one of the claims 9 to 11, wherein the electrolysis arrangement (1) is operated temporarily in a first power supply failure mode, in which the electrolysis stacks (4) of the second sub-group (A.2) of the first group (A) and of the second sub-group (B.2) of the second group (B) are powered via the second transformer (3.2) and the second input terminal (2.2), and wherein the electrolysis stacks (4) of the first sub-group (A.1) of the first group (A) and of the first sub-group (B.1) of the second group (B) are out of operation.

13. Method according to one of the claims 9 to 12, wherein the electrolysis arrangement (1) is operated temporarily in a second power supply failure mode, in which the electrolysis stacks (4) of the first sub-group (A.1) of the first group (A) and of the first sub-group (B.1) of the second group (B) are powered via the first transformer (3.1) and the first input terminal (2.1), and wherein the electrolysis stacks (4) of the second sub-group (A.2) of the first group (A) and of the second sub-group (B.2) of the second group (B) are out of operation.
